# EUROPÄISCHE PATENTSCHRIFT

(11) **EP 1 063 016 B1**
(45) Veröffentlichungstag und Bekanntmachung des Hinweises auf die Patenterteilung: **28.02.2007**
(21) Anmeldenummer: 00108837.6
(22) Anmeldetag: 26.04.2000
(51) Int. Cl.: B04B 11/04, G01F 23/296

(54) **Verfahren und Vorrichtung zur Messung der Füllstandshöhe in einer Filterzentrifuge**
Method and device for measuring the filling level of a filter centrifuge
Procédé et dispositif de mesure du niveau de remplissage d'une centrifugeuse filtrante

(30) Priorität: 27.04.1999 DE 19919118
(43) Veröffentlichungstag der Anmeldung: 27.12.2000
(73) Patentinhaber: Krauss-Maffei Process Technology AG, 80997 München (DE)
(72) Erfinder: Hegnauer, Bruno, 82131 Gauting (DE); Kratel, Thomas, 85247 Schwabhausen (DE)
(74) Vertreter: Glawe, Delfs, Moll

(56) Entgegenhaltungen:
- EP-A- 0 891 814
- DE-C- 19 716 129
- US-A- 4 210 969
- US-A- 5 897 786

## Beschreibung

Die Erfindung betrifft ein Verfahren zur Messung der Füllstandshöhe in der Zentrifugentrommel einer Filterzentrifuge gemäß Patentanspruch 1 sowie eine Vorrichtung zur Durchführung des Verfahrens.

Ein gattungsgemäßes Verfahren und eine Vorrichtung zur Durchführung dieses Verfahrens gehen aus der DE 197 16 129 hervor. Bei dieser bekannten Filterzentrifuge wird die Füllstandshöhe mit Ultraschallsensoren gemessen, die als berührungslose Abstandsmeßsysteme arbeiten. Das Meßprinzip beruht auf der Zeitmessung, die zwischen Aussendung eines Schalls und dem Empfang der Schallreflexion (Echolaufzeit) vergeht. Voraussetzung für eine exakte Messung des Abstandes ist eine konstante Schallgeschwindigkeit in dem Medium zwischen Ultraschallsensor und der zu messenden Oberfläche.

Die in den Filterzentrifugen zu trennenden Substanzen beeinhalten häufig Flüssigkeiten, die innerhalb des Verfahrensraumes der Zentrifuge zu einem gewissen Anteil verdampfen. Falls diese Flüssigkeiten explosionsempfindliche Dämpfe bilden, wie dies z.B. bei Lösungsmitteln der Fall ist, wird der Zentrifugenraum während des gesamten Betriebes der Zentrifuge mit Stickstoff überlagert, um das Entstehen eines zündfähigen Gemisches zu vermeiden. Für die Messung des Füllstandes mittels Ultraschall besteht nun das Problem, daß sich während des Füllvorganges, insbesondere bei diskontinuierlichen Filterzentrifugen, die Zusammensetzung des Gases innerhalb des Verfahrensraumes ändert. Wird z.B. ein Feststoff aus einem Lösungsmittel abgeschieden, wird der Verfahrensraum der Zentrifuge vor Beginn des Prozesses mit Stickstoff geflutet. Wird die Suspension nun in die Zentrifugentrommel aufgegeben, verdampft ein Teil des Lösungsmittels. Dabei verändert sich die Zusammensetzung des Gases im Verfahrensraum und damit auch die Schallgeschwindigkeit innerhalb dieses Gases. Da diese Veränderung des Gasgemisches (Stickstoff/Lösungsmitteldampf) von sehr vielen Faktoren, wie den Temperaturen des Stickstoffes und des Lösungsmittels sowie den Verwirbelungen bei der Aufgabe der Suspension in die Trommel beeinflußt wird, ist die exakte Gaszusammensetzung im Verfahrensraum nicht im voraus zu ermitteln. Durch die Veränderung der Schallgeschwindigkeit im Verfahrensraum wird die Ultraschallmessung ungenau, d.h. aus der Schalllaufzeit zwischen Ultraschallsensor und Innenoberfläche der Zentrifugentrommel kann kein exakter Füllstand in der Zentrifugentrommel ermittelt werden.

Der Erfindung liegt daher die Aufgabe zugrunde, bei Ultraschallmeßvorrichtungen der genannten Art ein Verfahren und eine Vorrichtung anzugeben, mit der die Genauigkeit der Messungen der Füllstandshöhe in der Zentrifugentrommel gesteigert werden kann.

Die Lösung dieser Aufgabe erfolgt durch die in den Patentansprüchen 1 und 2 angegebenen Merkmale, die Unteransprüche betreffen vorteilhafte Ausgestaltungen der Erfindung.

Ausführungsbeispiele der Erfindung sind in der Zeichnung dargestellt und werden nachstehend näher beschrieben. Es zeigt in schematischer Darstellung:
- Fig. 1: den Schnitt durch eine Filterzentrifuge,
- Fig. 2: einen Teilausschnitt der Filterzentrifuge nach Fig. 1 mit einem geraden Reflexionskonus,
- Fig. 3: einen Teilausschnitt der Filterzentrifuge nach Fig. 1 mit einem konkaven Reflexionskonus,
- Fig. 4: den Schnitt durch eine Filtertrommel mit einem in Form eines flachen Kegelstrumpfes ausgebildeten Trommelboden mit zwei Ultraschallsensoren,
- Fig. 5: die Filtertrommel nach Fig. 4 mit einem Ultraschallsensor,
- Fig. 6: den Schnitt durch die Filtertrommel einer Stülpfilterzentrifuge
- Fig. 7: eine Filterzentrifuge mit einer Hohlwelle durch deren Hohlkanal die Ultraschallimpulse von außen in den Innenraum der Zentrifugentrommelgesendet werden,
- Fig. 8: den Schnitt durch eine Filterzentrifuge nach Fig. 1, jedoch mit lediglich einem kombinierten Ultraschallsensor in einer Ausrichtung auf die Referenz-Reflexionsfläche und
- Fig. 9: die Filterzentrifuge nach Fig. 8 mit dem auf die Füllungsoberfläche der Zentrifugentrommel ausgerichteten Ultraschallsensor,
- Fig. 10: die Filterzentrifuge nach Fig. 1 jedoch mit nur einem Ultraschallsensor und damit fest verbundener Referenz-Reflexionsfläche,
- Fig. 11: einen Teilausschnitt der Filterzentrifuge nach Fig. 10 in vergrößertem Maßstab und
- Fig. 12: die Filterzentrifuge nach Fig. 1 jedoch mit nur einem direkt auf die Füllungsoberfläche gerichteten Ultraschallsensor und einer fest mit dem Ultraschallsensor verbundenen Referenz-Reflexionsfläche.

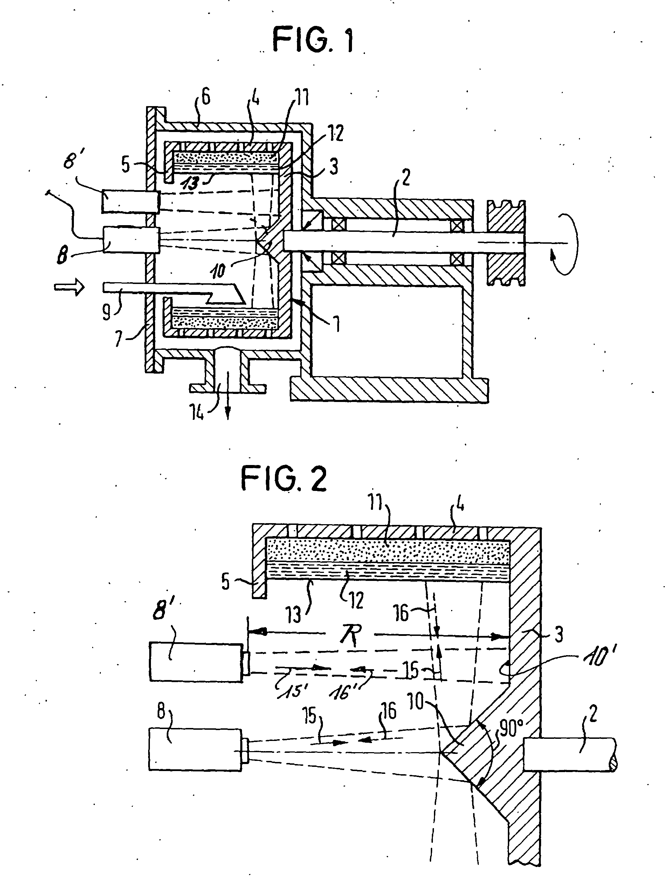

Die Fig. 1 und 2 zeigen eine Filterzentrifuge mit einer Zentrifugentrommel 1, die sich aus Trommelwelle 2, Trommelboden 3, Siebmantel 4 und Trommelrand 5 zusammensetzt. Die Trommelwelle 2 ist in einem die Filtertrommel 1 umschließenden Zentrifugengehäuse 6 gelagert. In dem Gehäusedeckel 7 sind ein Ultraschallsensor 8, ein Referenz-Ultraschallsensor 8' und ein in das Innere der Filtertrommel 1, den Verfahrensraum, ragendes Suspensionsfüllrohr 9 angeordnet. Auf der Innenseite des Trommelbodens 3 ist mittig ein eine Reflexionsfläche aufweisender Umlenkkonus 10 angeordnet. Die übrige ringförmige Fläche des Trommelbodens ist eine ebene Referenz-Reflexionsfläche 10'.

Die Zentrifugentrommel 1 ist mit einer Suspension gefüllt, deren Feststoffbestandteile sich in einer Feststoffschicht bzw. in einem Feststoffkuchen 11 abgesetzt haben, über der sich die aus Filtrat bestehende Flüssigkeitsschicht 12 mit der Füllungsoberfläche 13 befindet. Das Filtrat durchdringt im Betrieb der Filterzentrifuge den Feststoffkuchen 11 und wird über den Siebmantel 4 abgeschleudert und über die Ablauföffnung 14 des Zentrifugengehäuses 6 abgeleitet. Die Feststoffe des verbleibenden Feststoffkuchens 11 werden intervallweise durch eine Schälvorrichtung (nicht dargestellt) ausgetragen.

Die Fig. 2 zeigt das vom Ultraschallsensor 8 abgestrahlte Schallsignal 15 (Pfeil mit durchgehender Linie), das am Umlenkkonus 10 um 90° abgelenkt wird. An der Füllungsoberfläche 13 wird das Schallsignal 15 reflektiert und gelangt als Echosignal 16 (Pfeil mit unterbrochener Linie) zum Ultraschallsensor zurück, wo es von dessen Empfängereinheit registriert wird. Aus der Echolaufzeit von Schallsignal 15 und Echosignal 16 wird der Abstand zwischen Ultraschallsensor und Füllungsoberfläche 13 ermittelt und danach die Dicke der Füllungsschicht bestimmt.

Die Fig. 2 zeigt ferner das vom Referenz-Ultraschallsensor 8' abgestrahlte Referenz-Schallsignal 15' (Pfeil mit durchgehender Linie), das an der im festen Referenzabstand "R" angeordneten ebenen Referenz-Reflexionsfläche 10' reflektiert wird und als Referenz-Echosignal 16' (Pfeil mit unterbrochener Linie) zum Referenz-Ultraschallsensor 8' zurückgelangt. Aus der Echolaufzeit der Schallstrahlen 15' und 16' können aufgrund des festen Referenzabstandes "R" Veränderungen in der Gaszusammensetzung und die damit einhergehenden Veränderungen der Schallgeschwindigkeiten ermittelt werden und bei dem durch den Ultraschallsensor erhaltenen Meßergebnis korrigierend berücksichtigt werden.

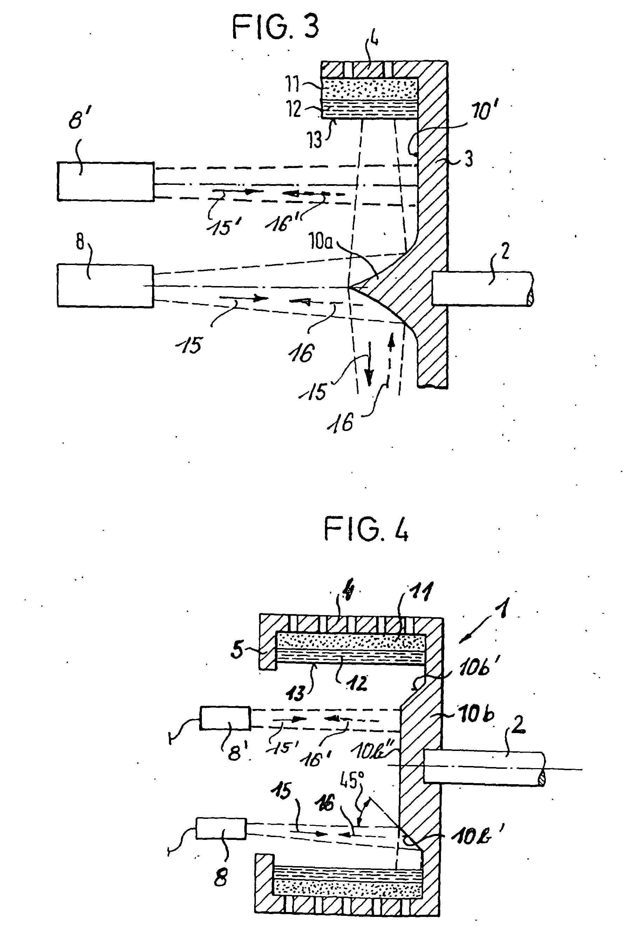

Die Fig. 3 zeigt eine andere Ausgestaltung des Umlenkkonus 10a dessen als Meßstrahl-Umlenkfläche dienende Konusfläche konkav ausgebildet ist. Die Umlenkfläche kann gemäß Fig. 4 auch als flacher Kegelstumpf 10b ausgebildet sein, bei dem die Mantelfläche 10b' als Meßstrahl-Umlenkfläche und die ebene Kegelstumpffläche 10b'' als Referenz-Reflexionsfläche dient. In der Ausführungsform nach Fig. 4 werden die Meßstrahl-Umlenkfläche und die Referenz-Reflexionsfläche gesondert vom Ultraschallsensor 8 und vom Referenz-Ultraschallsensor 8' beaufschlagt.

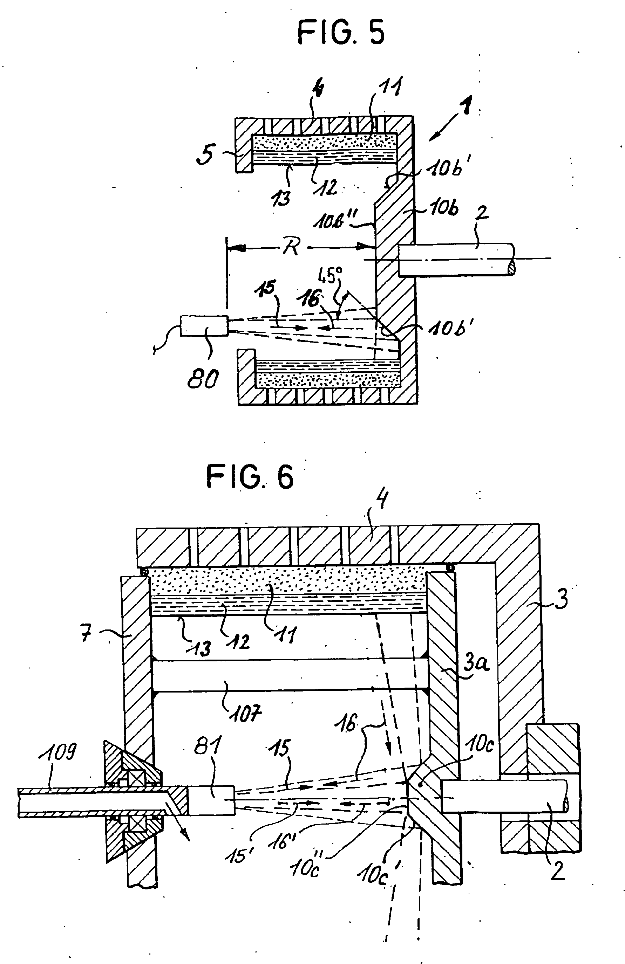

In der Ausführungsform nach Fig. 5 ist ein kombinierter Ultraschallsensor 80 vorgesehen, der sowohl die Funktion der Messung der Füllstandshöhe als auch die Funktion der Referenzmessung über die konstante Referenzstrecke "R" erfüllt. Der Schallstrahl des kombinierten Ultraschallsensors 80 ist dabei sowohl auf die Referenz-Reflexionsfläche als auch auf die Meßstrahl-Umlenkfläche gerichtet. Im kömbinierten Ultraschallsensor 80 werden sowohl die Echolaufzeiten des auf die Füllungsoberfläche gerichteten Schallstrahles als auch die Echolaufzeiten des auf die im festen Referenzabtand angeordnete Referenz-Reflexionsfläche gerichteten Schallstrahles registriert und in einer nachgeordneten Vergleicherschaltung (nicht dargestellt) ausgewertet.

Wie in Fig. 6 dargestellt, kann ein kombinierter Ultraschallsensor 81 auch am Ende des in den Verfahrensraum ragenden Füllrohres 109 einer Stülpfilterzentrifuge angeordnet sein. Die Referenz-Reflexionsfläche 10c'' und die Meßstrahl-Umlenkfläche 10c' sind dabei auf einen zentral auf dem Trommelboden 3a angeordneten Kegelstumpf 10c gerichtet, bei dem die mittige ebene Kegelstumpffläche vom zentrischen Bereich des Schallstrahles und die Mantelfläche des Kegelstumpfes 10c von den äußeren Bereichen des Schallstrahles beaufschlagt wird.

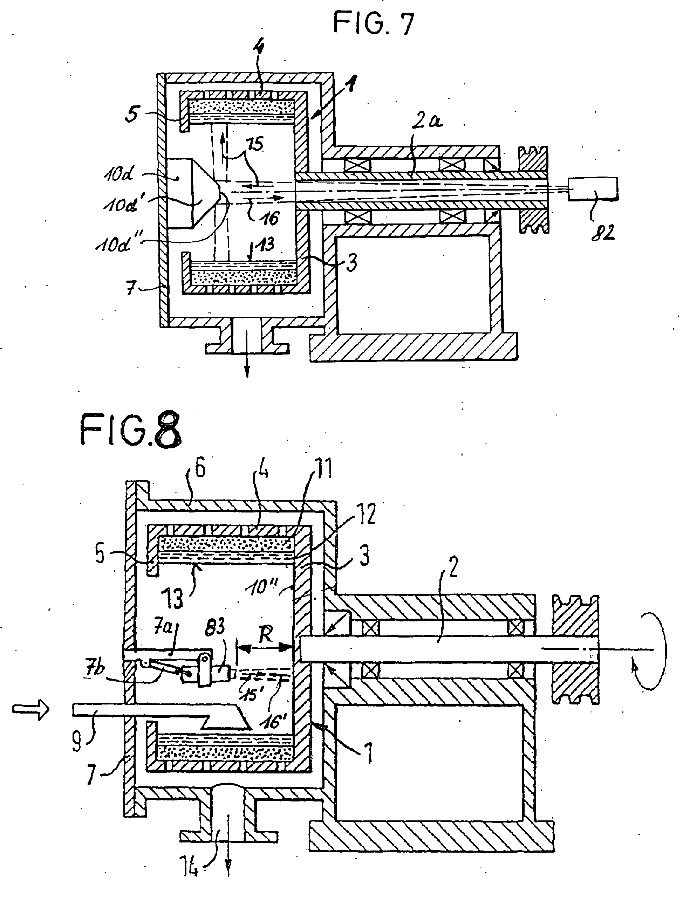

Gemäß Fig. 7 ist der die Referenz-Reflexionsfläche 10d" und die Meßstrahl-Umlenkfläche 10d' tragende Kegelstumpf 10d am Gehäusedeckel 7 der Filterzentrifuge befestigt und ragt in den Verfahrensraum im Inneren der Filtertrommel 1. Die Beaufschlagung der Referenz-Reflexionsfläche 10d'' und der Meßstrahl-Umlenkfläche 10d' erfolgt über die hohl ausgebildete Welle 2a der Filtertrommel 1 von einem außerhalb der Filterzentrifuge angeordneten kombinierten Ultraschallsensor 82, der somit keinerlei Risiko ausgesetzt ist, durch die im Verfahrensraum verwirbelten Suspensionspartikel verschmutzt zu werden. Die in Fig. 7 dargestellte Filterzentrifuge entspricht ansonsten der Ausführungsform nach Fig. 1.

Die vorbeschriebenen Ultraschallmeßeinrichtungen zur Messung der Füllstandshöhe in der Zentrifugentrommel einer Filterzentrifuge sind mit Meßstrahl-Umlenkflächen ausgerüstet, die dafür sorgen, daß die für eine einwandfreie Ultraschallmessung erforderlichen Mindestabstände zwischen Ultraschallsensor und Füllungsoberfläche eingehalten werden können. Die Anordnung von Meßstrahl-Umlenkflächen kann somit bei Filterzentrifugen mit verhältnismäßig kleinen Verfahrensräumen notwendig sein, oder bei Zentrifugen, in deren Verfahrensräumen sich Einbauten (z.B. die Abstandsbolzen 107 in der Trommel einer Stülpfilterzentrifuge) befinden, die eine direkte Schallstrahlführung vom Ultraschallsensor zur Füllungsoberfläche beeinträchtigen.

Die vorliegende Erfindung beschränkt sich jedoch nicht auf Zentrifugen bei denen die Messung der Füllstandshöhe über Meßstrahl-Umlenkflächen erfolgen muß.

Die Erfindung wurde ferner anhand von geradlinigen Referenzmeßstrecken mit festem Abstand "R" erläutert. Es kann sich jedoch auch für diese Referenzmeßstrekken die Notwendigkeit ergeben, diese über Umlenkflächen auf Referenz-Reflexionsflächen zu leiten, wenn aus meßtechnischen Gründen längere Strahlenführungsstrecken erforderlich sind.

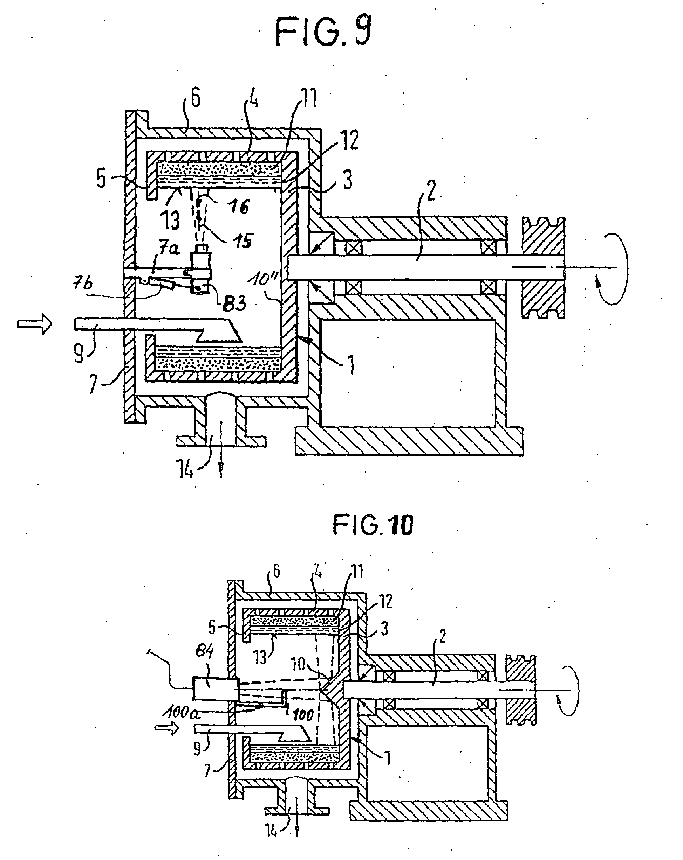

Die Fig. 8 und 9 zeigen eine Filterzentrifuge in der die Schallstrahlen des kombinierten Ultraschallsensors 83 ohne Meßstrahl-Umlenkflächen auf direktem Wege wechselweise auf die Füllungsoberfläche 13 und auf die im festen Referenzabstand "R" angeordnete Referenz-Reflexionsfläche 10'' gerichtet werden können. Der kombinierte Ultraschallsensor 83 ist dabei an einem am Gehäusedeckel 7 befestigten Haltearm 7a schwenkbar angeordnet, wobei die Verschwenkung über einen hydraulischen Stellzylinder 7b erfolgt. In der Stellung gemäß Fig. 8 ist der Ultraschallsensor auf die im Referenzabstand "R" befindliche Referenz-Reflexionsfläche 10" gerichtet und in der Stellung gemäß Fig. 9 in direkter Weise auf die Füllungsoberfläche 13. Die in den Fig. 8 und 9 dargestellte Filterzentrifuge entspricht ansonsten der Ausführungsform nach Fig. 1.

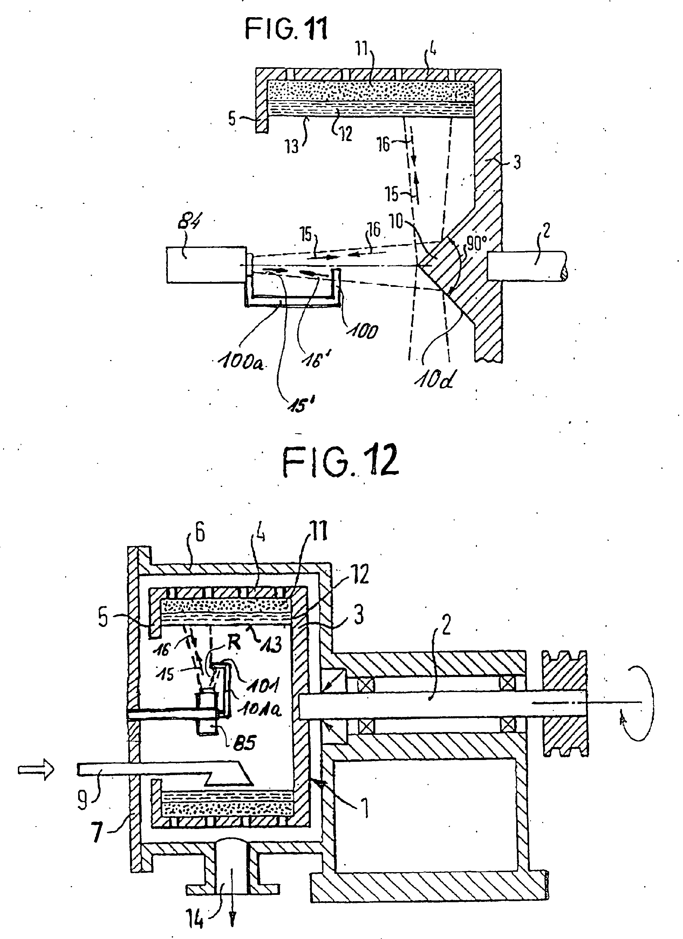

Die Fig. 10 und 11 zeigen einen Schnitt durch eine Filterzentrifuge, die der Filterzentrifuge nach Fig. 1 weitgehend entspricht, bei der jedoch anstelle eines gesonderten Ultraschallsensors für Referenzschallsignale ein kombinierter Ultraschallsensor 84 angeordnet ist, der sowohl Schallsignale über eine Meßstrahl-Umlenkfläche 10d zur Füllungsoberfläche 13 aussendet und die entsprechenden Echosignale registriert, als auch Referenzsignale aussendet und deren Echosignale erfaßt. Die Referenz-Reflexionsfläche 100 ist dabei über einen Halteraum 100a fest mit dem kombinierten Ultraschallsensor (84) verbunden.

Die Fig. 12 zeigt eine Filterzentrifuge, die der Filterzentrifuge nach Fig. 1 ebenfalls weitgehend entspricht, bei der jedoch die Funktion eines gesonderten Ultraschallsensors für Referenzsignale von einem kombinierten Ultraschallsensor 85 übernommen wird, dessen Ultraschallsignale zu einem Teil direkt auf die Füllungsoberfläche 13 gerichtet sind und zum anderen Teil an der Referenz-Reflexionsfläche 101 reflektiert werden, die von einem fest mit dem Ultraschallsensor 85 verbundenen Haltearm 101a in konstantem Referenzabstand "R" gehalten ist.

### Bezugszeichenliste

- 1.: Zentrifugentrommel
- 2.: Trommelwelle
- 3.: Trommelboden
- 4.: Siebmantel
- 5.: Trommelrand
- 6.: Zentrifugengehäuse
- 7.: Gehäusedeckel
- 7a.: Haltearm (Fig. 8,9)
- 8.: Ultraschallsensor
- 8': Referenz-Ultraschallsensor 8',80,81,82,83,84,85 kombinierte Ultraschallsensoren
- 9.: Suspensionsfüllrohr
- 10.: Umlenkkonus 10a;10b;10c;10d;10',10'' Referenz-Reflexionsfläche 100
- 11.: Feststoffkuchen
- 12.: Flüssigkeitsschicht
- 13.: Füllungsoberfläche
- 14.: Ablauföffnung
- 15.: abgestrahltes Schallsignal
- 15'.: Referenz-Schallstrahl
- 16.: Echosignal
- 16'.: Referenz-Echoschallstrahl

## Patentansprüche

1. Verfahren zur Messung der Füllstandshöhe in der Zentrifugentrommel (1) einer Filterzentrifuge mittels eines Ultraschallsensors (8), dessen Ultraschallimpulse im wesentlichen senkrecht auf die Füllungsoberfläche (13) der Zentrifugentrommel (1) gerichtet werden, wobei über den aus der Echolaufzeit des Ultraschallimpulses ermittelbaren Abstand des Ultraschallsensors von der Füllungsoberfläche (13) die Füllstandshöhe bestimmt wird, **dadurch gekennzeichnet, daß** neben der Messung der Echolaufzeit zwischen Ultraschallsensor (8) und Füllungsoberfläche (13) der Zentrifugentrommel (1) Referenzmessungen zwischen dem oder einem weiteren Ultraschallsensor (8',80,81,82,83,84,85) und einer eine Schallreflexion bewirkenden Referenz-Reflexionsfläche (10', 10", 101) vorgenommen werden, die sich in einem bestimmten Abstand "R" zu dem oder den Ultraschallsensoren (8', 80, 81, 82, 83, 84, 85) befindet.

2. Vorrichtung zur Durchführung des Verfahrens nach Anspruch 1, mit einem Ultraschallsensor zur Messung der Füllstandshöhe, wobei der Ultraschallsensor ein kombinierter Ultraschallsensor (80 - 85) zur Durchführung der Messung der Füllstandshöhe und der Referenzmessung ist oder wobei ein gesonderter Ultraschallsensor (8') zur Durchführung einer Referenzmessung vorgesehen ist, und mit einer eine Schallreflexion bewirkenden Referenzreflexionsfläche (10', 10", 101), wobei innerhalb der Zentrifugentrommel (1) zwischen dem entsprechenden Ultraschallsensor (8', 80 - 85) und der Referenz-Reflektionsfläche eine Referenzstrecke "R" zur Durchführung der Referenzmessungen bei feststehendem Abstand zwischen der Referenz-Reflektionsfläche und dem entsprechenden Ultraschallsensor eingerichtet ist.

3. Vorrichtung nach Anspruch 2, **dadurch gekennzeichnet, daß** sich die Referenzstrecke "R" zwischen dem am Gehäuse (6) der Filterzentrifuge befestigten Ultraschallsensor (8',80-85) und der an der Zentrifugentrommel (1) angeordneten Referenz-Reflexionsfläche (10',10b'',10c'',10) befindet.

4. Vorrichtung nach Anspruch 3, **dadurch gekennzeichnet, daß** die Referenz-Reflexionsfläche am Trommelboden der Zentrifugentrommel und der Ultraschallsensor an der dem Trommelboden gegenüberliegenden Wandung des Zentrifugengehäuses angeordnet sind.

5. Vorrichtung nach einem der Ansprüche 2 bis 4, **dadurch gekennzeichnet, daß** sich die Referenz-Reflexionsfläche und eine Meßstrahl-Umlenkfläche im Strahlbereich des kombinierten Ultraschallsensors (80,81,82,83,84,85) befinden.

6. Vorrichtung nach Anspruch 5, **dadurch gekennzeichnet, daß** die Innenfläche des Trommelbodens der Zentrifugentrommel die Form eines Kegelstumpfes (10b,10c,10d) aufweist, dessen Mantelfläche die Meßstrahl-Umlenkfläche und dessen ebene Kegelstumpffläche die Referenz-Reflexionsfläche darstellen

7. Vorrichtung nach Anspruch 2, **dadurch gekennzeichnet, daß** in den Innenraum der Zentrifugentrommel ein gehäusefester Kegelstumpf (10d) ragt, dessen Mantelfläche die Meßstrahl-Umlenkfläche (10d') und dessen ebene Kegelstumpffläche (10d'') die Referenz-Reflexionsfläche ist, wobei der Ultraschallsensor (82) außerhalb der Filterzentrifuge positioniert ist und der Schallstrahl durch die als Hohlwelle (2a) ausgebildete Trommelwelle auf die Meßstrahl-Umlenkfläche (10d') und die Referenz-Reflexionsfläche (10d'') gerichtet ist.

8. Vorrichtung nach Anspruch 2, **dadurch gekennzeichnet, daß** der Ultraschallsensor (83) innerhalb der Filterzentrifuge schwenkbar angeordnet ist und zwischen einer Position, in der der Schallstrahl die Füllungsoberfläche (13) beaufschlagt, und einer Position, in der der Schallstrahl die Referenz-Reflexionsfläche (10'') beaufschlagt, schwenkbar ist.

9. Vorrichtung nach Anspruch 2, **dadurch gekennzeichnet, daß** die Referenz-Reflexionsfläche (100,101) fest mit dem Ultraschallsensor (84,85) verbunden ist, wobei ein Teil des Schallstrahles die Referenz-Reflexionsfläche (100,101) und ein Teil des Schallstrahles die Füllungsoberfläche (13) der Zentrifugentrommel beaufschlagt.

10. Vorrichtung nach Anspruch 3, **dadurch gekennzeichnet, daß** die Beaufschlagung der Füllungsoberfläche (13) der Zentrifugentrommel mit einem Teil des Schallstrahles über eine Meßstrahl-Umlenkfläche (10d) erfolgt.

11. Vorrichtung nach Anspruch 2, **dadurch gekennzeichnet, daß** bei einer Filterzentrifuge in der Ausführungsform einer Stülpfilterzentrifuge der Ultraschallsensor (81) am Ende des durch den Verschlußdeckel (7) in das Innere der Zentrifugentrommel ragenden Füllrohres (109) angeordnet ist, wobei der Schallstrahl des Ultraschallsensors (81) im Inneren der Zentrifugentrommel auf eine Referenz-Reflexionsfläche und auf die Füllungsoberfläche der Zentrifugentrommel richtbar ist.

12. Vorrichtung nach Anspruch 11, **dadurch gekennzeichnet, daß** am Trommelboden der Zentrifugentrommel der Stülpfilterzentrifuge eine vom Schallstrahl des Ultraschallsensors (81) beaufschlagbare Referenz-Reflexionsfläche (10c'') und eine Meßstrahl-Umlenkfläche (10c') in Form eines Kegelstumpfes (10c) angeordnet ist, dessen Mantelfläche die Meßstrahl-Umlenkfläche (10c') und dessen ebene Fläche die Referenz-reflexionsfläche (10c") bilden.

## Claims

1. A method of measuring the filling level in a centrifuge drum (1) of a filtering centrifuge by means of an ultrasonic sensor (8), the ultrasonic pulses of which are directed substantially perpendicular to the filling surface (13) of the centrifuge drum (1), wherein the filling level is determined via the distance of the ultrasonic sensor from the filling surface (13), which distance can be ascertained from the echo propagation time of the ultrasonic pulse, **characterised in that**, in addition to measuring the echo propagation time between the ultrasonic sensor (8) and the filling surface (13) of the centrifuge drum (1), reference measurements are taken between the or a further ultrasonic sensor (8',80,81,82,83,84,85) and a reference reflecting face (10',10",101) which induces an acoustic reflection and which is situated at a given distance "R" from the ultrasonic sensor or sensors (8',80,81,82,83,84,85).

2. An apparatus for carrying out the method according to Claim 1, with an ultrasonic sensor for measuring the filling level, wherein the ultrasonic sensor is a combined ultrasonic sensor (80-85) for carrying out the measurement of the filling level and the reference measurement or wherein a separate ultrasonic sensor (8') is provided to carry out the reference measurement, and with a reference reflecting face (10',10",101) inducing an acoustic reflection, wherein inside the centrifuge drum (1) between the corresponding ultrasonic sensor (8',80-85) and the reference reflecting face a reference distance "R" is set up to carry out the reference measurements with a fixed spacing between the reference reflecting face and the corresponding ultrasonic sensor.

3. An apparatus according to Claim 2, **characterised in that** the reference distance "R" is situated between the ultrasonic sensor (8',80-85) mounted on the housing (6) of the filtering centrifuge and the reference reflecting face (10', 10", 101) disposed on the centrifuge drum (1).

4. An apparatus according to Claim 3, **characterised in that** the reference reflecting face is disposed on the drum base of the centrifuge drum and the ultrasonic sensor is disposed on the wall of the centrifuge housing opposite the drum base.

5. An apparatus according to Claim 2 to 4, **characterised in that** the reference reflecting face and a measuring beam deflecting surface are situated within the beam range of the combined ultrasonic sensor (8',80,81,82, 83,84,85).

6. An apparatus according to Claim 5, **characterised in that** the inner surface of the drum base of the centrifuge drum is in the shape of a truncated cone (10b,10c,10d), the circumferential surface of which represents the measuring beam deflecting surface and the plane frustoconical surface of which represents the reference reflecting face.

7. An apparatus according to Claim 2, **characterised in that** a truncated cone (10d) fixed to the housing protrudes into the interior of the centrifuge drum, the circumferential surface of which is the measuring beam deflecting surface (10d') and the plane frustoconical surface (10d") of which is the reference reflecting face, wherein the ultrasonic sensor (82) is positioned outside the filtering centrifuge and the acoustic beam is directed through the drum shaft in the form of a hollow shaft (2a) on to the measuring beam deflecting surface (10d') and the reference reflecting face (10d").

8. An apparatus according to Claim 2, **characterised in that** the ultrasonic sensor (83) is pivotably mounted inside the filtering centrifuge and is pivotable between a position in which the acoustic beam acts on the filling surface (13), and a position in which the acoustic beam acts on the reference reflecting face (10").

9. An apparatus according to Claim 2, **characterised in that** the reference reflecting face (100,101) is securely connected to the ultrasonic sensor (84,85), wherein part of the acoustic beam acts on the reference reflecting face (100,101) and part of the acoustic beam acts on the filling surface (13) of the centrifuge drum.

10. An apparatus according to Claim 3, **characterised in that** the action of part of the acoustic beam on the filling surface (13) of the centrifuge drum is effected via a measuring beam deflecting surface (10d).

11. An apparatus according to Claim 2, **characterised in that** with a filtering centrifuge in the form of an inverted filtering centrifuge the ultrasonic sensor (81) is disposed at the end of the filling pipe (109) protruding through the closure cover (7) into the interior of the centrifuge drum, wherein the acoustic beam of the ultrasonic sensor (81) inside the centrifuge drum can be directed on to a reference reflecting face and on to the filling surface of the centrifuge drum.

12. An apparatus according to Claim 11, **characterised in that** a reference reflecting face (10c"), which can be acted upon by the acoustic beam of the ultrasonic sensor (81), and a measuring beam deflecting surface (10c') in the form of a truncated cone (10c) is disposed on the drum base of the centrifuge drum of the inverted filtering centrifuge, the circumferential surface of which truncated cone forms the measuring beam deflecting surface (10c') and the plane surface of which forms the reference reflecting face (10c").

## Revendications

1. Procédé de mesure du niveau de remplissage dans le panier (1) d'une centrifugeuse de filtrage au moyen d'un capteur à ultrasons (8), dont les impulsions ultrasonores sont dirigées sensiblement perpendiculairement à la surface de remplissage (13) du panier de la centrifugeuse (1), le niveau de remplissage étant déterminé par la distance qui peut être déterminée par l'intermédiaire du temps de propagation de l'écho de l'impulsion ultrasonore, à savoir la distance entre le capteur à ultrasons (8) et la surface de remplissage (13), **caractérisé en ce que**, outre la mesure du temps de propagation de l'écho entre le capteur à ultrasons (8) et la surface de remplissage (13) du panier de la centrifugeuse (1), sont effectuées des mesures de référence entre le capteur à ultrasons (8) ou un autre capteur à ultrasons (8', 80, 81, 82, 83, 84, 85) et une surface de réflexion de référence (10', 10", 101), qui provoque une réflexion sonore et qui est située à une distance (R) déterminée du ou des capteurs à ultrasons (8', 80, 81, 82, 83, 84, 85).

2. Dispositif destiné à la mise en oeuvre du procédé selon la revendication 1, comportant un capteur à ultrasons destiné à mesurer le niveau de remplissage, le capteur à ultrasons étant un capteur à ultrasons (80-85) combiné destiné à la mise en oeuvre de la mesure du niveau de remplissage et de la mesure de référence ou un capteur à ultrasons (8') séparé étant prévu pour la mise en oeuvre d'une mesure de référence, et comportant une surface de réflexion de référence (10', 10", 101), une distance de référence (R) étant réalisée à l'intérieur du panier de la centrifugeuse (1) entre le capteur à ultrasons (8', 80-85) correspondant et la surface de réflexion de référence, en vue d'effectuer des mesures de référence avec une distance fixe entre la surface de réflexion de référence et le capteur à ultrasons correspondant.

3. Dispositif selon la revendication 2, **caractérisé en ce que** la distance de référence (R) se situe entre le capteur à ultrasons (8', 80-85), fixé contre le carter (6) de la centrifugeuse de filtrage, et la surface de réflexion de référence (10', 10b", 10c", 10) agencée au niveau du panier de la centrifugeuse (1).

4. Dispositif selon la revendication 3, **caractérisé en ce que** la surface de réflexion de référence est située sur le fond du panier de la centrifugeuse et le capteur à ultrasons est disposé sur la paroi, opposée au fond, du carter de la centrifugeuse.

5. Dispositif selon l'une quelconque des revendications 2 à 4, **caractérisé en ce que** la surface de réflexion de référence et une surface de déviation du faisceau de mesure se situent dans la zone de rayonnement du capteur à ultrasons (80, 81, 82, 83, 84, 85) combiné.

6. Dispositif selon la revendication 5, **caractérisé en ce que** la face intérieure du fond du panier de la centrifugeuse a la forme d'un cône tronqué (10b, 10c, 10d), dont la paroi latérale constitue la surface de déviation du faisceau de mesure et dont la surface plane de cône tronqué constitue la surface de réflexion de référence.

7. Dispositif selon la revendication 2, **caractérisé en ce qu'**à l'intérieur du panier de la centrifugeuse s'engage un cône tronqué (10d), qui est solidaire du carter et dont la paroi latérale est la surface de déviation du faisceau de mesure (10d') et dont la surface plane (10d") de cône tronqué est la surface de réflexion de référence, le capteur à ultrasons (82) étant positionné en dehors de la centrifugeuse de filtrage et le faisceau sonore étant dirigé sur la surface de déviation du faisceau de mesure (10d') et la surface de réflexion de référence (10d"), en passant à travers l'arbre du panier, réalisé sous forme d'arbre creux (2a).

8. Dispositif selon la revendication 2, **caractérisé en ce que** le capteur à ultrasons (83) est monté pivotant à l'intérieur de la centrifugeuse et est apte à pivoter entre une position, dans laquelle le faisceau sonore sollicite la surface de remplissage (13), et une position, dans laquelle le faisceau sonore sollicite la surface de réflexion de référence (10").

9. Dispositif selon la revendication 2, **caractérisé en ce que** la surface de réflexion de référence (100, 101) est assemblée de manière fixe avec le capteur à ultrasons (84, 85), une partie du faisceau sonore sollicitant la surface de réflexion de référence (100, 101) et une partie du faisceau sonore sollicitant la surface de remplissage (13) du panier de la centrifugeuse.

10. Dispositif selon la revendication 3, **caractérisé en ce que** la surface de remplissage (13) du panier de la centrifugeuse est sollicitée par une partie du faisceau sonore par l'intermédiaire d'une surface de déviation du faisceau de mesure (10d).

11. Dispositif selon la revendication 2, **caractérisé en ce que**, dans une centrifugeuse selon le mode de réalisation d'une centrifugeuse à filtre retourné, le capteur à ultrasons (81) est disposé au niveau de l'extrémité du tube de remplissage (109) qui passe à travers le couvercle de fermeture (7) et s'engage à l'intérieur du panier de la centrifugeuse, le faisceau sonore du capteur à ultrasons (81) à l'intérieur du panier de la centrifugeuse pouvant être dirigé sur une surface de réflexion de référence et sur la surface de remplissage du panier de la centrifugeuse.

12. Dispositif selon la revendication 11, **caractérisé en ce que**, sur le fond du panier de la centrifugeuse à filtre retourné, sont disposées une surface de réflexion de référence (10c"), pouvant être sollicitée par le faisceau sonore du capteur à ultrasons (81), et une surface de déviation du faisceau de mesure (10c') en forme de cône tronqué (10c), dont la paroi latérale forme la surface de déviation du faisceau de mesure (10c') et dont la surface plane de cône tronqué forme la surface de réflexion de référence (10c").
